# EUROPÄISCHE PATENTSCHRIFT

(11) **EP 4 185 931 B1**
(45) Veröffentlichungstag und Bekanntmachung des Hinweises auf die Patenterteilung: **07.05.2025**
(21) Anmeldenummer: 21736269.8
(22) Anmeldetag: 21.06.2021
(51) Int. Cl.: G05B 23/02, G06F 11/16

(54) **VERFAHREN ZUM ÜBERWACHEN EINES ERSTEN PROZESSORS EINES SENSORMODULS DURCH EINEN ZWEITEN PROZESSOR**
METHOD FOR MONITORING A FIRST PROCESSOR OF A SENSOR MODULE BY MEANS OF A SECOND PROCESSOR
PROCÉDÉ DE SURVEILLANCE D'UN PREMIER PROCESSEUR D'UN MODULE CAPTEUR PAR UN SECOND PROCESSEUR

(30) Priorität: 22.07.2020 DE 102020119297
(43) Veröffentlichungstag der Anmeldung: 31.05.2023
(73) Patentinhaber: Endress+Hauser SE+Co. KG, 79689 Maulburg (DE)
(72) Erfinder: KARWECK, Lars, 79589 Binzen (DE); ZIERINGER, Thomas, 79650 Schopfheim (DE); MÜLLER, Stefan, 79312 Emmendingen (DE); SCHMITT, Eric, 68640 Steinsoultz (FR)
(74) Vertreter: Endress + Hauser Group Services (Deutschland) AG+Co. KG
(86) Internationale Anmeldenummer: PCT/EP2021/066749
(87) Internationale Veröffentlichungsnummer: WO 2022/017700

(56) Entgegenhaltungen:
- DE-A1- 10 326 665
- DE-A1- 102016 125 240
- US-A1- 2006 236 844

## Beschreibung

Die Erfindung bezieht sich auf ein Verfahren zum Überwachen eines in ein Sensormodul eines Feldgerätes der Automatisierungstechnik integrierten ersten digitalen Prozessors mit einem ersten Satz von Maschinenbefehlen auf dem zum Berechnen eines Messwertes anhand von zugeführten Rohmesswerten ein Algorithmus ausgeführt wird durch einen in ein Hauptelektronik-Modul des Feldgerätes integrierten zweiten digitalen Prozessor.

In der Prozessautomatisierungstechnik ebenso wie in der Fertigungsautomati-sierungstechnik werden vielfach Feldgeräte eingesetzt, die zur Erfassung und/oder Beeinflussung von Prozessgrößen dienen. Zur Erfassung von Prozessgrößen dienen Messgeräte bzw. Sensoren, wie beispielsweise Füllstandsmessgeräte, Durchflussmessgeräte, Druck- und Temperaturmessgeräte, pH-Redoxpotentialmessgeräte, Leitfähigkeitsmessgeräte, etc., welche die entsprechenden Prozessvariablen Füllstand, Durchfluss, Druck, Temperatur, pH-Wert bzw. Leitfähigkeit erfassen. Zur Beeinflussung von Prozessgrößen dienen Aktoren, wie zum Beispiel Ventile oder Pumpen, über die der Durchfluss einer Flüssigkeit in einem Rohrleitungsabschnitt bzw. der Füllstand in einem Behälter geändert werden kann.

Eine Vielzahl solcher Feldgeräte wird von der Endress + Hauser-Gruppe hergestellt und vertrieben.

Derartige Feldgeräte weisen für gewöhnlich eine elektronische Sensorschaltung auf, welche an sich bekannt sind. Die elektronische Sensorschaltung wird bei den Feldgeräten eingesetzt, um Rohmesswerte weiterverarbeiten zu können. Beispielsweise wird über ein analoges elektrisches Wandlerelement eine Prozessgröße in Form von Rohmesswerten erfasst und die analogen Rohmesswerte über einen Analog-Digital-Konverter digitalisiert, um anschließend die digitalisierten Rohmesswerte über einen digitalen Prozessor mit Hilfe eines Algorithmus weiterverarbeiten zu können. Hierbei kann über den digitalen Prozessor eine Reihe von Operation mit den Rohmesswerten durchgeführt werden. Beispielsweise kann eine Temperaturkompensation der Rohmesswerte durchgeführt werden, umso ein temperaturkompensiertes digitales Ausgangssignal in Form von Messwerten zu erhalten.

Um derartige Feldgeräte in sicherheitskritischen Anwendungen einsetzen zu können, werden erhöhte Anforderungen an die Funktionsfähigkeit des Feldgerätes gestellt, so dass ein Fehler des Feldgerätes nicht unbemerkt bleibt. Hierzu gehört beispielsweise die Zertifizierung von Feldgeräten nach dem so genannten SIL-Standard der internationalen Norm IEC 61508 zur funktionalen Sicherheit.

Für die Erreichung von SIL 2 werden in der Regel für eine möglichst hohe Fehlererkennung und Anteil so genannter sicherer Ausfälle (SFF nach dem englischen Safe Failure Fraction) Diagnosemaßnahmen in Form von redundanter Hardware und/oder Software eingesetzt. So befindet sich beispielsweise ein weiterer digitaler Prozessor neben dem digitalen Prozessor der Sensorelektronik zur Weiterverarbeitung der digitalisierten Rohmesswerte im Feldgerät. Auf diesem weiteren Prozessor läuft ebenfalls der Algorithmus ab, anhand dessen die Rohmesswerte weiterverarbeitet werden. Dem weiteren Prozessor sind die gleichen Eingangsdaten wie dem Prozessor der Sensorelektronik zugeführt, so dass die Ausgangsdaten des weiteren Prozessors den Ausgangsdaten des Prozessors der Sensorelektronik entsprechen sollten. Auf diese Weise lässt sich ein einfacher Vergleich der beiden Ausgangsdaten vornehmen und somit der Prozessor der Sensorelektronik überwachen.

Aus dem Stand der Technik sind die DE 10 2016 125240 A1 und die US 2006/236844 A1 bekannt geworden. Die DE 10 2016 125240 A1 offenbart ein Verfahren zum Überprüfen eines digitalen Prozessors. Die US 2006/236844 A1 offenbart ein Verfahren zur Validierung des Betriebes eines Steuerungssystems.

Nachteilig hieran ist, dass der Algorithmus bei jedem Start des Feldgerätes in den weiteren Prozessor geschrieben werden muss. Dies muss insbesondere dann erfolgen, wenn sich der Algorithmus auf dem Prozessor der Sensorelektronik ändert.

Der Erfindung liegt die somit die Aufgabe zugrunde, eine für die Erreichung von SIL2 notwendige Diagnosemaßnahme vorzuschlagen, die auf einfache Art und Weise in einem Feldgerät der Automatisierungstechnik realisiert werden kann.

Die Aufgabe wird erfindungsgemäß gelöst durch das Verfahren gemäß Patentanspruch 1.

Das erfindungsgemäße Verfahren zum Überwachen eines in ein Sensormodul eines Feldgerätes der Automatisierungstechnik integrierten ersten digitalen Prozessors mit einem ersten Satz von Maschinenbefehlen, auf dem zum Berechnen eines Messwertes anhand von zugeführten Rohmesswerten ein erster Algorithmus ausgeführt wird, durch einen in ein Hauptelektronik-Modul des Feldgerätes integrierten zweiten digitalen Prozessor, weist die Folgenden Verfahrensschritte auf:
a) Berechnen von Verifikationsdaten anhand von vorgegebenen Eingangsdaten mittels eines zweiten Testalgorithmus auf einer von dem Feldgerät unabhängigen externen Recheneinheit, wobei der zweite Testalgorithmus in wenigstens einen Anfangsabschnitt und einen Endabschnitt unterteilt ist, wobei der Anfangsabschnitt und der Endabschnitt zumindest einen Teil, vorzugsweise alle, Opcodes des ersten Satzes von Maschinenbefehlen, die beim Ausführen des ersten Algorithmus auf dem ersten digitalen Prozessor verwendet werden, umfassen;
b) Speichern der zum Berechnen der Verifikationsdaten vorgegebenen Eingangsdaten und die mittels des zweiten Testalgorithmus errechneten Verifikationsdaten in dem Sensormodul des Feldgerätes;
c) Übertragen der in dem Sensormodul gespeicherten vorgegebenen Eingangsdaten und der Verifikationsdaten in das Hauptelektronik-Modul;
d) Übertragen der vorgegebenen Eingangsdaten von dem Hauptelektronik-Modul an das Sensormodul während des Messbetriebes des Feldgerätes;
e) Ausführen des zweiten Testalgorithmus auf dem ersten digitalen Prozessor des Sensormoduls derartig, dass anhand der von dem Hauptelektronik-Modul übertragenen vorgegebenen Eingangsdaten Ausgangsdaten berechnet werden, und der erste Algorithmus zwischen dem Anfangsabschnitt und dem Endabschnitt ausgeführt wird, sodass nach dem Ausführen des zweiten Testalgorithmus anhand der Verifikationsdaten überprüft werden kann, ob der erste Algorithmus vollständig durchlaufen wurde;
f) Verfügbar machen der durch den ersten digitalen Prozessor berechneten Ausgangsdaten in dem Hauptelektronik-Modul;
g) Überprüfen der Ausgangsdaten mit den von dem Sensormodul verfügbar gemachten Verifikationsdaten durch den zweiten digitalen Prozessor des Hauptelektronik-Moduls und in dem Fall, dass die Ausgangsdaten nicht mit den Verifikationsdaten übereinstimmen, eine Fehlfunktion festzustellen.

Erfindungsgemäß wird vorgeschlagen, dass Verifikationsdaten mittels eines Testalgorithmus auf einer externen Recheneinheit, bspw. einem Fertigungsrechner, berechnet werden. Dies kann bspw. mittels eines numerischen Berechnungstools erfolgen. Um die Verifikationsdaten zu erhalten wird der Testalgorithmus mit spezifischen Eingangsdaten ausgeführt. Anschließend werden sowohl die Eingangsdaten als auch die Verifikationsdaten, die mit den Eingangsdaten berechnet worden sind, auf einem Speicherelement, bspw. in Form einer Look-up Tabelle, gespeichert. Dies erfolgt insbesondere bei der Herstellung des Sensormoduls durch den Hersteller des Sensormoduls. Durch das Berechnen und Speichern der Eingangs- als auch Verifikationsdaten im Vorfeld, d.h. vor dem eigentlichen Einsatz des Feldgerätes im Messbetrieb, kann dann beim späteren Ausführen des Testalgorithmus im eigentlichen Messbetrieb auf das parallele Ausführen des Testalgorithmus auf dem zweiten Prozessor, der den ersten Prozessor überwacht, verzichtet werden. Vielmehr muss der Testalgorithmus nur noch auf dem zu überwachenden ersten Prozessor während des Messbetriebes ausgeführt werden und anschließend kann anhand der in dem Sensormodul gespeicherten Eingangs- und Verifikationsdaten überprüft werden, ob die durch das Ausführen des Testalgorithmus auf dem ersten Prozessor berechneten Ausgangsdaten mit den zuvor von dem Sensormodul zu dem Hauptelektronik-Modul übertragenen Verifikationsdaten übereinstimmen, wobei im Falle einer Abweichung, eine Fehlfunktion festgestellt wird.

Eine weitere vorteilhafte Ausführungsform des erfindungsgemäßen Verfahrens sieht vor, dass die Verfahrensschritte d) bis g) zyklisch im Messbetrieb des Feldgerätes durchgeführt werden.

Eine weitere vorteilhafte Ausführungsform des erfindungsgemäßen Verfahrens sieht vor, dass der Verfahrensschritt c) bei einem Systemstart des Feldgerätes durchgeführt wird.

Eine weitere vorteilhafte Ausführungsform des erfindungsgemäßen Verfahrens sieht vor, dass der Verfahrensschritt b) während der Herstellung des Sensormoduls, insbesondere durch den Feldgerätehersteller, durchgeführt wird.

Eine weitere vorteilhafte Ausführungsform des erfindungsgemäßen Verfahrens sieht vor, dass im eigentlichen Messbetrieb des Feldgerätes Rohmesswerte zyklisch dem ersten digitalen Prozessor zugeführt werden und die Rohmesswerte im eigentlichen Messbetrieb zyklisch mittels des ersten Algorithmus von dem ersten digitalen Prozessor weiterverarbeitet werden.

Eine weitere vorteilhafte Ausführungsform des erfindungsgemäßen Verfahrens sieht vor, dass wobei im eigentlichen Messbetrieb des Feldgerätes die Rohmesswerte mit einer höheren Taktrate dem ersten digitalen Prozessor zugeführt und mittels des ersten Algorithmus weiterverarbeitet werden als das Ausführen des zweiten Testalgorithmus mit den vorgegebenen Eingangsdaten erfolgt.

Eine weitere vorteilhafte Ausführungsform des erfindungsgemäßen Verfahrens sieht vor, dass der erste Algorithmus in mehrere Abschnitte C1...Cn unterteilt ist und beim Ausführen die mehreren Abschnitte des ersten Algorithmus zwischen dem Anfangsabschnitt und dem Endabschnitt ausgeführt werden. Insbesondere kann die Ausführungsform vorsehen, dass ferner auch der zweite Testalgorithmus in mehrere Abschnitte S1...Sn unterteilt ist und beim Ausführen die Abschnitte des ersten Algorithmus C1...Cn und des zweiten Testalgorithmus S1...Sn alternierend bzw, abwechselnd ausgeführt werden.

Eine weitere vorteilhafte Ausführungsform des erfindungsgemäßen Verfahrens sieht vor, dass die Verifikationsdaten auf einem Fertigungsrechner bei der Herstellung des Sensormoduls durch den Hersteller des Sensormoduls berechnet werden. Insbesondere können die Verifikationsdaten mittels eines numerischen Berechnungstools auf dem Fertigungsrechner berechnet werden.

Die Erfindung wird anhand der nachfolgenden Zeichnungen näher erläutert. Es zeigt:
Fig. 1: ein schematisches Blockdiagramm eines Feldgeräts mit einer aus dem Stand der Technik bekannten elektronischen Feldgeräteschaltung,
Fig. 2: ein schematisches Blockdiagramm eines Ausführungsbeispiels eines Feldgeräts, welches eine mit dem erfindungsgemäßen Verfahren eingerichtete elektronische Feldgeräteschaltung umfasst,
Fig. 3 eine schematische Darstellung des Algorithmus der während des eigentlichen Messbetriebs auf dem ersten Prozessor des Sensormoduls, bspw. zur Temperaturkompensation, abläuft,
Fig. 4 eine schematische Darstellung des Testalgorithmus der erfindungsgemäß auf dem ersten Prozessor des Sensormoduls zum Überwachen des ersten Prozessors abläuft, und
Fig. 5 eine schematische Darstellung einer vorteilhaften Variante des Testalgorithmus der erfindungsgemäß auf dem ersten Prozessor des Sensormoduls zum Überwachen des ersten Prozessors abläuft.

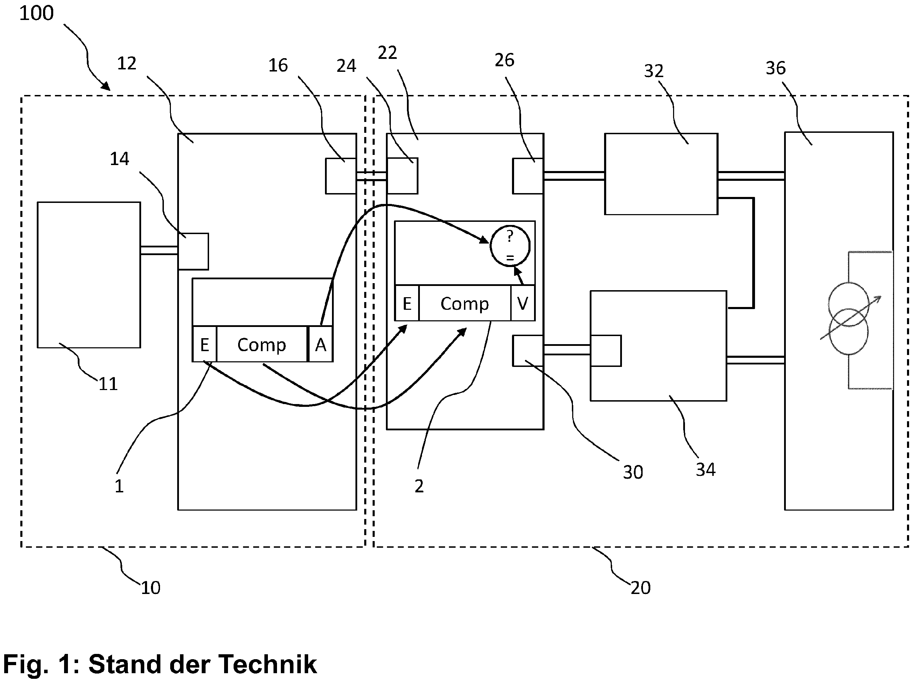

Das in Fig. 1 dargestellte Feldgerät 100 umfasst eine elektronische Feldgeräteschaltung, die sich aus einem Sensormodul 10 und einem Hauptelektronik-Modul 20 zusammensetzt, und einer zueinander komplementär ausgebildete digitale Kommunikationsschnittstelle 16, 24. Das Sensormodul und die Hauptelektronik 20 sind derartig ausgebildet, dass verschiedene Sensormodule in Abhängigkeit der zu erfassenden physikalischen Größe an die Hauptelektronik 20 anschließbar sind bzw. diese kompatibel zueinander sind. Hierbei ist die Hauptelektronik 20 immer gleich ausgebildet und lediglich das Sensormodul ist, je nachdem welche physikalische Größe erfasst werden soll, also bspw. ob eine Druck- oder eine Füllstandsgröße erfasst werden soll, unterschiedlich aufgebaut.

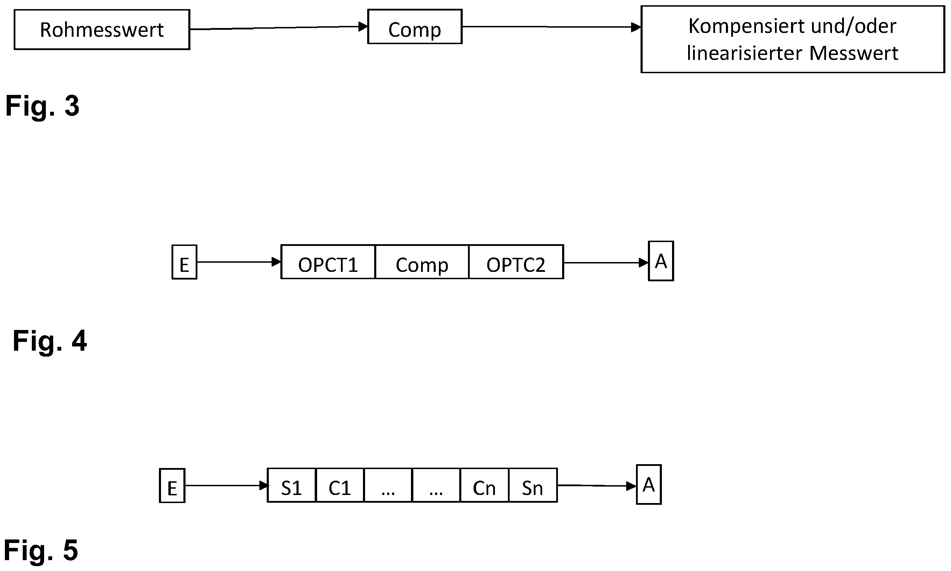

Das Sensormodul 10 umfasst ein Wandlerelement 11, beispielsweise ein kapazitiv oder resistiv arbeitendes Druckwandlerelement, und eine Sensorelektronik 12, wobei Rohmesswerte in Form eines Primärsignals von dem Wandlerelement an einen analogen Sensoreingang 14 der Sensorelektronik 12 geführt sind. Diese Rohmesswerte werden von der Sensorelektronik 12 digitalisiert und anschließend durch einen ersten digitalen Prozessor 1, beispielsweise einen digitalen Signalprozessor (DSP), mittels eines auf diesem Prozessor 1 ablaufenden Algorithmus Comp in entsprechende Messwerte weiterverarbeitet bzw. aufbereitet. Typischerweise erfolgt mittels des auf dem digitalen Signalprozessor 1 ablaufenden Algorithmus Comp eine Temperaturkompensation des Rohmesswertes. Fig. 3 verdeutlicht den Ablauf des Algorithmus auf dem ersten Prozessor anhand dessen die Rohmesswerte zu einem kompensierten Messwert weiterverarbeitet werden. Der Rohmesswert kann bspw. im Abstand von einigen Millisekunden (ms) bis hin zu einigen zehn Millisekunden durch den ersten Prozessor verarbeitet werden. Der aufbereitete Messwert wird über eine erste digitale Kommunikationsschnittstelle 16 dem Hauptelektronik-Modul 20 zur Verfügung gestellt.

Um bei der Fertigung des Feldgerätes eine erhöhte Flexibilität zu erzielen ist das Sensormodul als austauschbares Modul ausgebildet. Hierdurch können verschiedene Sensormodule mit dem Hauptelektronik-Modul bei der Fertigung kombiniert werden, umso das Feldgerät spezifisch für eine Messaufgabe auszubilden.

Das Hauptelektronik-Modul 20 umfasst in dem dargestellten Ausführungsbeispiel einen Logikeinheit, einen Stromregler 32, ein HART-Modem 34 und eine Kommunikationsschnittstelle, bspw. eine gesteuerte Stromquelle 36.

Die Logikeinheit 22 umfasst einen zweiten digitalen Prozessor, beispielsweise einen Mikroprozessor, eine zweite digitale Kommunikationsschnittstelle 24, welche mit der ersten digitalen Kommunikationsschnittstelle 16 kommuniziert. Über diese digitale Kommunikationsschnittstelle wird beispielsweise im normalen Messbetrieb der digitale Messwert übertragen, und die Logikeinheit 22 veranlasst den Stromregler 32 über eine dritte digitale Kommunikationsschnittstelle 26, die gesteuerte Stromquelle 36 so zu regeln, dass sie ein analoges Stromsignal stellt, welches den digitalen Messwert oder eine davon abgeleitete Messgröße repräsentiert.

Weiterhin umfasst die Logikeinheit 22 eine vierte digitale Kommunikationsschnittstelle 30, über welche das HART-Modem 34 angesteuert wird, um dem analogen Stromsignal digitale Informationen aufzumodulieren, beispielsweise Statusinformationen.

Die aus dem Stand der Technik bekannten elektronischen Schaltungen sind derartig eingerichtet, dass auf dem ersten Prozessor 1 der Algorithmus Comp unter zumindest teilweiser Verwendung der für den ersten Prozessor 1 zur Verfügung stehenden Maschinenbefehle ausgeführt wird.

Um den eingangs erwähnten SIL-Maßnahmen gerecht zu werden, wird auf den zweiten Prozessor 2 ebenfalls der Algorithmus Comp aufgespielt. Das Aufspielen erfolgt gemäß dem Stand der Technik beim Start des Feldgerätes bzw. in einer Initialisierungsphase des Feldgeräts bevor es in den eigentlichen Messbetrieb wechselt. Hierbei wird der Algorithmus über die interne Kommunikationsschnittstelle 16 und 24 von dem Sensormodul zu dem Hauptelektronik-Modul übertragen. Sowohl der Algorithmus auf dem ersten als auch auf dem zweiten Prozessor werden zur Laufzeit, d.h. während des eigentlichen Messbetriebes des Feldgerätes, dann parallel ausgeführt.

Auf dem zweiten Prozessor wird durch den Algorithmus unter Zuhilfenahme der Maschinenbefehle des zweiten Prozessors 2 die ausgangsseitigen Verifikationsdaten V berechnet. Hierzu werden die Eingangsdaten E von dem Sensormodul zu dem Hauptmodul, bspw. über die Kommunikationsschnittstelle 16 und 24 übertragen. Die durch den zweiten Prozessor 2 erhaltenen Verifikationsdaten V werden anschließend gemäß dem Stand der Technik mit den durch den ersten Prozessor 1 erhaltenen Ausgangsdaten A verglichen, um eine Überprüfung des ersten Prozessors 1 zu ermöglichen. Hierbei wird im Fall, dass die beiden Ergebnisse nicht übereinstimmen, ein Fehler festgestellt und signalisiert. Durch das redundante Ausführen des Algorithmus sowohl auf dem ersten als auch auf dem zweiten Prozessor wird das SIL Level 2 erreicht.

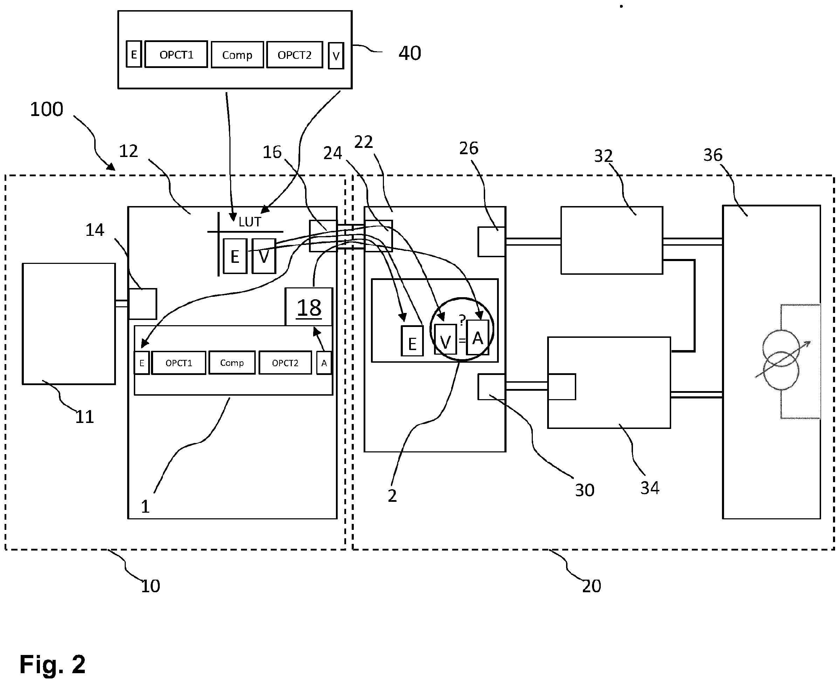

Figur 2 zeigt ein schematisches Blockdiagramm eines Ausführungsbeispiels eines erfindungsgemäßen Feldgerätes. Das hier dargestellte Feldgerät weist dieselben Komponenten wie das in Figur 1 dargestellte Feldgerät auf. Gleiche Komponenten sind dabei mit den gleichen Bezugszeichen benannt.

Bei dem in Fig. 2 dargestellten Ausführungsbeispiel weist das Sensormodul des Feldgerätes zusätzlich einen nicht flüchtigen Speicher auf, in dem eine Tabelle (Look up Table) abgelegt ist.

In der Tabelle werden Eingangsdaten und Verifikationsdaten gespeichert bzw. hinterlegt. Die Eingangsdaten und die Verifikationsdaten werden erfindungsgemäß extern d.h. außerhalb des Feldgerätes, beispielsweise bei der Fertigung mittels einer entsprechenden Software auf einer Recheneinheit berechnet. Zur Berechnung kann beispielsweise ein numerisches Berechnungstool bzw. Software wie z.B. MATLAB oder eine ähnliche Software dienen. Hierbei werden anhand von vorgegebenen Eingangsdaten dazugehörige Verifikationsdaten berechnet. Anschließend werden die Eingangsdaten und die Verifikationsdaten während der Herstellung des Sensormoduls in dem Speicher des Sensormoduls abgelegt, sodass diese später beim eigentlichen Messbetrieb des Feldgerätes zur Verfügung stehen.

Somit muss nicht mehr der gesamte Algorithmus über die interne Kommunikationsschnittstelle 16 und 24 übertragen werden, um die eingangs erwähnten SIL-Maßnahmen zu erfüllen, sondern lediglich die in dem Speicher abgelegten Eingangs- und Verifikationsdaten. Die Übertragung der Eingangs- und Verifikationsdaten von dem Sensormodul zum Hauptelektronik-Modul erfolgt vorzugsweise bei einem Systemstart des Feldgerätes, bevor das Feldgerät den eigentlichen Messbetrieb aufnimmt.

Durch den zweiten Prozessor des Hauptelektronik-Moduls wird die Ausführung des Testalgorithmus initiiert. Dies kann beispielsweise zyklisch im eigentlichen Messbetrieb erfolgen. Dies bedeutet, dass der zweite Prozessor im eigentlichen Messbetrieb, in dem zur Kompensation des Rohmesswertes der Algorithmus auf dem ersten Prozessor des Sensormoduls ausgeführt wird, das Ausführen des Testalgorithmus auf dem ersten Prozessor startet. Hierzu überträgt der zweite Prozessor zunächst die Eingangsdaten, die beim Systemstart in dem Hauptelektronik-Modul verfügbar gemacht worden sind, an das Sensormodul.

Im nächsten Schritt wird, durch den zweiten Prozessor initiiert, der Testalgorithmus auf dem ersten Prozessor ausgeführt. Hierzu werden mittels der zuvor übertragenen Eingangsdaten Ausgangsdaten berechnet. Der Testalgorithmus ist derartig ausgebildet, dass durch ihn alle Maschinenbefehle bzw. alle Opcodes, die zum Ausführen des Algorithmus Comp benötigt werden, zumindest einmal verwendet werden. Bei dem Testalgorithmus handelt es sich um einen sogenannten Opcode Test, bei dem zumindest Teile der Opcodes des ersten Prozessors getestet werden.

Der Testalgorithmus kann, wie in Fig. 4 exemplarisch dargestellt, zumindest in einen Anfangs- und einen Endabschnitt OPCT1 und OPCT2 unterteilt sein. Der erste Prozessor 1 ist ferner derartig eingerichtet, dass zumindest ein Teil des Algorithmus Comp, vorzugsweise der gesamte Algorithmus Comp zwischen dem Anfangsabschnitt OPCT1 und dem Endabschnitt OPCT2 ausgeführt wird.

Alternativ kann sowohl der Testalgorithmus Opcode in eine Vielzahl von Abschnitten C1...Cn als auch der Algorithmus Comp in eine Vielzahl von Abschnitten S1...Sn unterteilt sein, und der erste Prozessor so eingerichtet sein, dass beim Ausführen alternierend ein Teil des Testalgorithmus und anschließend ein Teil des eigentlichen Algorithmus ausgeführt wird, bis alle Teile des Algorithmus Comp und alle Teile des Testalgorithmus durchlaufen sind. Fig. 5 verdeutlicht eine derartige Variante, bei der mittels der zuvor übertragenen Eingangsdaten Ausgangsdaten durch den ersten Prozessor 1 berechnet werden.

Im nächsten Schritt werden die durch den ersten Prozessor 1 berechneten Ausgangsdaten in dem Hauptelektronik-Modul verfügbar gemacht, sodass der zweite Prozessor darauf Zugriff hat. Dies kann beispielsweise dadurch erfolgen, dass die Ausgangsdaten über die interne Kommunikationsschnittstelle 16 und 24 von dem ersten zu dem zweiten Prozessor übertragen werden. Hierfür können die Ausgangsdaten zunächst in einem internen Registers 18 des ersten Prozessors 1 vorgehalten werden, sodass der zweite Prozessor über die Kommunikationsschnittstelle 16 und 24 darauf zugreifen kann.

Anschließend wird durch den zweiten Prozessor überprüft, ob die verfügbar gemachten Ausgangsdaten mit den, vorzugsweise bei dem Systemstart des Feldgerätes, vom Sensormodul zu dem Hauptelektronik-Modul übertragenen Verifikationsdaten übereinstimmen. In dem Fall, dass eine Abweichung der Daten festgestellt wird, wird ferner durch den zweiten Prozessor eine Fehlermeldung ausgegeben.

## Patentansprüche

1. Verfahren zum Überwachen eines in ein Sensormodul (10) eines Feldgerätes der Automatisierungstechnik (100) integrierten ersten digitalen Prozessors (1) mit einem ersten Satz von Maschinenbefehlen, auf dem zum Berechnen eines Messwertes anhand von zugeführten Rohmesswerten ein erster Algorithmus (Comp) ausgeführt wird, durch einen in ein Hauptelektronik-Modul (20) des Feldgerätes (100) integrierten zweiten digitalen Prozessor (2), aufweisend die Folgenden Verfahrensschritte:
a) Berechnen von Verifikationsdaten anhand von vorgegebenen Eingangsdaten (E) mittels eines zweiten Testalgorithmus (OPCT1, OPCT2) auf einer von dem Feldgerät unabhängigen externen Recheneinheit (40), wobei der zweite Testalgorithmus (OPCT1, OPCT2) in wenigstens einen Anfangsabschnitt (OPCT1) und einen Endabschnitt (OPCT2) unterteilt ist, wobei der Anfangsabschnitt (OPCT1) und der Endabschnitt (OPCT2) zumindest einen Teil, vorzugsweise alle, Opcodes des ersten Satzes von Maschinenbefehlen, die beim Ausführen des ersten Algorithmus (Comp) auf dem ersten digitalen Prozessor verwendet werden, umfassen;
b) Speichern der zum Berechnen der Verifikationsdaten (V) vorgegebenen Eingangsdaten (E) und die mittels des zweiten Testalgorithmus (OPCT1, OPCT2) errechneten Verifikationsdaten (V) in dem Sensormodul (10) des Feldgerätes (100);
c) Übertragen der in dem Sensormodul (10) gespeicherten vorgegebenen Eingangsdaten (E) und der Verifikationsdaten (V) in das Hauptelektronik-Modul (20);
d) Übertragen der vorgegebenen Eingangsdaten (E) von dem Hauptelektronik-Modul (20) an das Sensormodul (10) während des Messbetriebes des Feldgerätes (100);
e) Ausführen des zweiten Testalgorithmus (OPCT1, OPCT2) auf dem ersten digitalen Prozessor (1) des Sensormoduls (10) derartig, dass anhand der von dem Hauptelektronik-Modul (20) übertragenen vorgegebenen Eingangsdaten (E) Ausgangsdaten (A) berechnet werden, wobei der erste Algorithmus (Comp) zwischen dem Anfangsabschnitt (OPCT1) und dem Endabschnitt (OPCT2) ausgeführt wird, sodass nach dem Ausführen des zweiten Testalgorithmus anhand der Verifikationsdaten überprüft werden kann, ob der erste Algorithmus vollständig durchlaufen wurde;
f) Verfügbar machen der durch den ersten digitalen Prozessor berechneten Ausgangsdaten in dem Hauptelektronik-Modul;
g) Überprüfen der Ausgangsdaten (A) mit den von dem Sensormodul (10) verfügbar gemachten Verifikationsdaten (V) durch den zweiten digitalen Prozessor (2) des Hauptelektronik-Moduls (20) und in dem Fall, dass die Ausgangsdaten (A) nicht mit den Verifikationsdaten (V) übereinstimmen, eine Fehlfunktion festzustellen.

2. Verfahren nach Anspruch 1, wobei die Verfahrensschritte d) bis g) zyklisch im Messbetrieb des Feldgerätes (100) durchgeführt werden.

3. Verfahren nach Anspruch 1 oder 2, wobei der Verfahrensschritt c) bei einem Systemstart des Feldgerätes (100) durchgeführt wird.

4. Verfahren nach einem oder mehreren der vorhergehenden Ansprüche, wobei der Verfahrensschritt b) während der Herstellung des Sensormoduls (10), insbesondere durch den Feldgerätehersteller, durchgeführt wird.

5. Verfahren nach einem oder mehreren der vorhergehenden Ansprüche, wobei im eigentlichen Messbetrieb des Feldgerätes (100) Rohmesswerte zyklisch dem ersten digitalen Prozessor (1) zugeführt werden und die Rohmesswerte im eigentlichen Messbetrieb zyklisch mittels des ersten Algorithmus (Comp) von dem ersten digitalen Prozessor (1) weiterverarbeitet werden.

6. Verfahren nach einem oder mehreren der vorhergehenden Ansprüche, wobei im eigentlichen Messbetrieb des Feldgerätes (100) die Rohmesswerte mit einer höheren Taktrate dem ersten digitalen Prozessor (1) zugeführt und mittels des ersten Algorithmus (Comp) weiterverarbeitet werden als das Ausführen des zweiten Testalgorithmus (OPCT1, OPCT2) mit den vorgegebenen Eingangsdaten (E) erfolgt.

7. Verfahren nach einem oder mehreren der vorhergehenden Ansprüche, wobei der erste Algorithmus in mehrere Abschnitte (C1...Cn) unterteilt ist und beim Ausführen die mehreren Abschnitte des ersten Algorithmus zwischen dem Anfangsabschnitt (OPCT1) und dem Endabschnitt (OPCT2) ausgeführt werden.

8. Verfahren nach dem vorhergehenden Anspruch, wobei ferner auch der zweite Testalgorithmus (OPCT1, OPCT2) in mehrere Abschnitte (S1...Sn) unterteilt ist und beim Ausführen die Abschnitte des ersten Algorithmus (C1...Cn) und des zweiten Testalgorithmus (S1...Sn) alternierend ausgeführt werden.

9. Verfahren nach einem oder mehreren der vorhergehenden Ansprüche, wobei die Verifikationsdaten (V) auf einem Fertigungsrechner (40) bei der Herstellung des Sensormoduls (10) durch den Hersteller des Sensormoduls (10) berechnet werden.

10. Verfahren nach dem vorhergehenden Anspruch, wobei die Verifikationsdaten mittels eines numerisches Berechnungstools auf dem Fertigungsrechner (40) berechnet werden.

## Claims

1. A method for monitoring a first digital processor (1) integrated into a sensor module (10) of an automation technology field device (100) with a first set of machine commands on which a first algorithm (Camp) is run in order to calculate a measured value based on supplied raw measured values, using a second digital processor (2) integrated into a main electronic module (20) of the field device (100), exhibiting the following process steps:
a) Calculating verification data based on specified input data (E) using a second test algorithm (OPCT1, OPCT2) on an external processor unit (40) independent of the field device, wherein the second test algorithm (OPCT1, OPCT2) is divided into at least one start section (OPCT1) and one end section (OPCT2), wherein the start section (OPCT1) and the end section (OPCT2) comprise at least some of, preferably all, opcodes of the first set of machine commands, which are used when running the first algorithm (Camp) on the first digital processor;
b) Saving the specified input data (E) for calculating the verification data (V) and the verification data (V) calculated using the second test algorithm (OPCT1, OPCT2) in the sensor module (10) of the field device (100);
c) Transmitting the specified input data (E) and verification data (V) stored in the sensor module (10) to the main electronic module (20);
d) Transmitting the specified input data (E) from the main electronic module (20) to the sensor module (10) when the field device (100) is in measuring mode;
e) Running the second test algorithm (OPCT1, OPCT2) on the first digital processor (1) of the sensor module (10) in such a way that output data (A) is calculated based on the specified input data (E) transmitted by the main electronic module (20), wherein the first algorithm (Camp) is run between the start section (OPCT1) and the end section (OPCT2) so that, after running the second test algorithm, the verification data can be used to check whether the first algorithm has been run in full;
f) Providing the output data calculated by the first digital processor in the main electronic module;
g) Checking the output data (A) with the verification data (V) made available by the sensor module (10) using the second digital processor (2)of the main electronic module (20) and, in the event that the output data (A) does not correspond to the verification data (V), detecting a malfunction.

2. The method as claimed in claim 1, wherein process steps d) to g) are performed cyclically when the field device (100) is in measuring mode.

3. The method as claimed in claim 1 or 2, wherein process step c) is performed upon a system start of the field device (100).

4. The method as claimed in one or more of the preceding claims, wherein process step b) is carried out during production of the sensor module (10), in particular by the field device manufacturer.

5. The method as claimed in one or more of the preceding claims, wherein when the field device (100) is in measuring mode, raw measured values are cyclically supplied to the first digital processor (1) and in measuring mode the raw measured values are cyclically further processed by the first digital processor (1) using the first algorithm (Camp).

6. The method as claimed in one or more of the preceding claims, wherein when the field device (100) is in measuring mode, a higher cycle rate is used to supply the raw measured values to the first digital processor (1) and to further process these by means of the first algorithm (Camp) than is used to run the second test algorithm (OPCT1, OPCT2) with the specified input data (E).

7. The method as claimed in one or more of the preceding claims, wherein the first algorithm is divided into multiple sections (C1 to Cn) and, during implementation, the multiple sections of the first algorithm are run between the start section (OPCT1) and the end section (OPCT2).

8. The method as claimed in the preceding claim, wherein the second test algorithm (OPCT1, OPCT2) is also divided into multiple sections (S1 to Sn) and, during implementation, the sections of the first algorithm (C1 to C2) and the second test algorithm (S1 to Sn) are run alternately.

9. The method as claimed in one or more of the preceding claims, wherein the verification data (V) is calculated on an industrial PC (40) by the manufacturer of the sensor module (10) during production of the sensor module (10).

10. The method as claimed in the preceding claim, wherein the verification data is calculated using a numerical calculation tool on the industrial PC (40).

## Revendications

1. Procédé destiné à la surveillance d'un premier processeur numérique (1) intégré dans un module capteur (10) d'un appareil de terrain de la technique d'automatisation (100) avec un premier jeu d'instructions machine, processeur sur lequel un premier algorithme (Comp) est exécuté pour calculer une valeur de mesure à l'aide de valeurs de mesure brutes fournies, par un deuxième processeur numérique (2) intégré dans un module électronique principal (20) de l'appareil de terrain (100), lequel procédé comprend les étapes suivantes :
a) Calcul de données de vérification à partir de données d'entrée prédéfinies (E) au moyen d'un deuxième algorithme de test (OPCT1, OPCT2) sur une unité de calcul externe (40) indépendante de l'appareil de terrain, le deuxième algorithme de test (OPCT1, OPCT2) étant divisé en au moins une section initiale (OPCT1) et une section finale (OPCT2), la section initiale (OPCT1) et la section finale (OPCT2) comprenant au moins une partie, de préférence la totalité, des codes optiques du premier ensemble d'instructions machine utilisées lors de l'exécution du premier algorithme (Comp) sur le premier processeur numérique ;
b) Stockage des données d'entrée prédéfinies (E) pour calculer les données de vérification (V) et des données de vérification (V) calculées au moyen du deuxième algorithme de test (OPCT1, OPCT2) dans le module capteur (10) de l'appareil de terrain (100) ;
c) Transmission des données d'entrée prédéfinies (E) et des données de vérification (V) stockées dans le module capteur (10) au module électronique principal (20) ;
d) Transmission des données d'entrée prédéfinies (E) du module électronique principal (20) au module capteur (10) pendant le mode de mesure de l'appareil de terrain (100) ;
e) Exécution du deuxième algorithme de test (OPCT1, OPCT2) sur le premier processeur numérique (1) du module capteur (10) de telle sorte que des données de sortie (A) soient calculées à l'aide des données d'entrée prédéfinies (E) transmises par le module électronique principal (20), le premier algorithme (Comp) étant exécuté entre la section initiale (OPCT1) et la section finale (OPCT2), de sorte qu'après l'exécution du deuxième algorithme de test, on puisse vérifier à l'aide des données de vérification si le premier algorithme a été entièrement exécuté ;
f) Mise à disposition des données de sortie calculées par le premier processeur numérique disponibles dans le module électronique principal ;
g) Vérification des données de sortie (A) avec les données de vérification (V) rendues disponibles par le module capteur (10) par le deuxième processeur numérique (2) du module électronique principal (20) et, dans le cas où les données de sortie (A) ne correspondent pas aux données de vérification (V), constatation d'un dysfonctionnement.

2. Procédé selon la revendication 1, pour lequel les étapes de procédé d) à g) sont exécutées de manière cyclique pendant le mode de mesure de l'appareil de terrain (100).

3. Procédé selon la revendication 1 ou 2, pour lequel l'étape de procédé c) est exécutée lors d'un démarrage du système de l'appareil de terrain (100).

4. Procédé selon l'une ou plusieurs des revendications précédentes, pour lequel l'étape de procédé b) est réalisée pendant la fabrication du module capteur (10), notamment par le fabricant d'appareils de terrain.

5. Procédé selon l'une ou plusieurs des revendications précédentes, pour lequel, en mode de mesure proprement dit de l'appareil de terrain (100), des valeurs de mesure brutes sont acheminées de manière cyclique au premier processeur numérique (1) et les valeurs de mesure brutes sont traitées de manière cyclique par le premier processeur numérique (1) au moyen du premier algorithme (Comp) en mode de mesure proprement dit.

6. Procédé selon l'une ou plusieurs des revendications précédentes, pour lequel, lors du mode de mesure proprement dit de l'appareil de terrain (100), les valeurs de mesure brutes sont acheminées au premier processeur numérique (1) à une cadence plus élevée et sont traitées ultérieurement au moyen du premier algorithme (Comp) lorsque l'exécution du deuxième algorithme de test (OPCT1, OPCT2) a lieu avec les données d'entrée (E) prédéfinies.

7. Procédé selon l'une ou plusieurs des revendications précédentes, pour lequel le premier algorithme est divisé en plusieurs sections (C1...Cn) et, lors de l'exécution, les plusieurs sections du premier algorithme sont exécutées entre la section initiale (OPCT1) et la section finale (OPCT2).

8. Procédé selon l'une ou plusieurs des revendications précédentes, pour lequel en outre le deuxième algorithme de test (OPCT1, OPCT2) est également divisé en plusieurs sections (S1...Sn) et, lors de l'exécution, les sections du premier algorithme (C1...Cn) et du deuxième algorithme de test (S1...Sn) sont exécutées en alternance.

9. Procédé selon l'une ou plusieurs des revendications précédentes, pour lequel les données de vérification (V) sont calculées sur un ordinateur de fabrication (40) lors de la fabrication du module capteur (10) par le fabricant du module capteur (10).

10. Procédé selon la revendication précédente, pour lequel les données de vérifications sont calculées au moyen d'un outil de calcul numérique se trouvant sur l'ordinateur de fabrication (40).
